# EUROPEAN PATENT SPECIFICATION

(11) **EP 3 112 141 B1**
(45) Date of publication and mention of the grant of the patent: **23.01.2019**
(21) Application number: 16175049.2
(22) Date of filing: 17.06.2016
(51) Int. Cl.: B29C 47/00, B29K 19/00, B29D 30/30, B29D 30/62, B29C 47/32

(54) **APPARATUS AND METHOD FOR FORMING AN ELASTOMERIC STRIP**
VORRICHTUNG UND VERFAHREN ZUR HERSTELLUNG EINES ELASTOMERSTREIFENS
APPAREIL ET PROCÉDÉ DE FORMATION D'UNE BANDE ÉLASTOMÈRE

(30) Priority: 30.06.2015 US 201562186699 P; 30.06.2015 US 201562186730 P
(43) Date of publication of application: 04.01.2017
(73) Proprietor: The Goodyear Tire & Rubber Company, Akron, Ohio 44316 (US)
(72) Inventor: BURG, Gary Robert, Massillon, OH Ohio 44646 (US); DYRLUND, Christopher David, Canton, OH Ohio 44705 (US)
(74) Representative: Kutsch, Bernd

(56) References cited:
- US-A- 4 927 482
- US-A- 4 963 207
- US-A1- 2005 183 810
- US-A1- 2009 274 786
- US-A1- 2013 020 737
- US-B1- 6 372 070

## Description

### Technical Field

This invention relates to an apparatus and to a method for forming an elastomeric strip.

### Background of the Invention

It is well known in the prior art to manufacture tire components from elastomeric sheets of rubber which are then cut to length with the ends joined together by a lap or butt splice onto a cylindrically shaped building drum. Since the tire components are assembled flat onto a cylindrical tire building drum and then expanded into a toroidal shape, each component has to be placed in tension or compression prior to being molded. This stretching of the various parts causes slippage between the various rubber parts as the components heat up during vulcanization. Attempts to minimize the slippage of the various parts have been attempted. Another disadvantage is that the tire has components which are spliced, wherein the splices contribute to tire non-uniformity.

Tire manufacturers have been increasingly focusing their efforts on eliminating tire nonuniformities. More recently, tire manufacturers are making tire components from a continuous strip of unvulcanized rubber. A thin, narrow strip of unvulcanized rubber is circumferentially wound multiple times onto a rotating drum or toroid shaped core, wherein the strips are successively layered or stacked in order to form the desired shape of the tire component. See for example, US-A-6,372,070 and US-A-4,963,207. The strip of rubber is typically extruded directly onto a tire building drum or toroidal-shaped core using an extruding device. Alternatively the strips may be formed from calendering and then conveyed to the tire drum or core.

This strip lamination method of forming tire components has the advantage of eliminating splices because the annular tire component is typically formed of one continuous strip. Strip lamination has the further advantage of allowing flexibility in manufacturing, since the tire component profile may be changed from tire to tire.

It is known to extrude the rubber through a nozzle or shaping die and to apply the strip of rubber using a roller or stitcher to a tire building drum. However, these systems typically have the disadvantage of causing high pressure and high temperature of the rubber in the system due to the small exit area opening. If the residence time of the rubber is too slow through the system, the rubber may be scorched if the temperature is too high. Thus it is desired to have an improved system which will lower the system temperature and pressure while forming the desired shape of the rubber strip.

US-A-2013/0020737 describes an extrusion device including a sculpted extrusion die comprising a pair of mating lips having sculpted surfaces and defining a die exit for an extrudate. The contour of the sculpted surfaces is substantially similar to the contour of a juxtaposed surface configured for receiving the extrudate from the die exit. The receiving surface may be a rotatable roller.

A similar device for extruding a strip of rubber using an extruder having an opening with a shutter means onto a rotatable roller is also described in US-A-2009/0274786.

US-A-4,927,482 describes a method and an apparatus for producing tire tread strips. The individual rubber profile strips, formed from various mixtures, are each extruded from individual extrusion devices. Each extrusion device has its own extrusion head having an appropriate nozzle outlet which delivers each strip onto its own individual roller.

US-A-2007/0029029 describes a nozzle and a roller apparatus wherein the nozzle has an opening which is V-shaped.

Further nozzle and roller apparatus comprising a nozzle having an opening are described in EP-A-2 535 176, US-A-3,274,645 and US-A-5,030,079.

### Summary of the Invention

The invention relates to an apparatus in accordance with claim 1 and to methods in accordance with claim 5.

Dependent claims refer to preferred embodiments of the invention.

In a preferred aspect of the method in accordance with the invention, the nozzle has a shaped die surface that cooperates with the curved outer surface of the roller to form a nozzle outlet.

In a preferred aspect of the method in accordance with the invention, the opening of the nozzle is located on a lower curved surface.

In a preferred aspect of the method in accordance with the invention, the roller outer surface has a temperature in the range of from 93°C to 177°C.

In a preferred aspect of the method in accordance with the invention, the pumping means is an extruder or an extruder in combination with a gear pump.

The outlet of the nozzle is V-shaped.

In a preferred aspect of the method in accordance with the invention, the nozzle compresses the elastomeric material directly onto the outer surface of the roller.

In a preferred aspect of the method in accordance with the invention, the elastomeric material is in a molten state in the nozzle.

In a preferred aspect of the method in accordance with the invention, the elastomeric material is in a molten state in the apparatus.

In a preferred aspect of the method in accordance with the invention, the elastomeric material is in a molten state prior to entering the apparatus.

In a preferred aspect of the method in accordance with the invention, the elastomeric material is in a molten state when it is applied to the roller outer surface.

In a preferred aspect of the method in accordance with the invention, the pumping means is an extruder or an extruder in combination with a gear pump.

In a preferred aspect of the method in accordance with the invention, the apparatus has an interior channel decreasing in area.

### Definitions

"Axial" and "axially" means lines or directions that are parallel to the axis of rotation of the tire;

"Circumferential" means lines or directions extending along the perimeter of the surface of the annular tread perpendicular to the axial direction;

"Radial" and "radially" means directions radially toward or away from the axis of rotation of the tire.

### Brief Description of the Drawings

The invention will be described by way of example and with reference to the accompanying drawings in which:
Figure 1 is a perspective view of a rubber applicator apparatus of the present invention;
Figure 2 is a close-up perspective view of a roller and nozzle of the rubber applicator apparatus of the present invention;
Figure 3 is a side cross-sectional view of the apparatus of Figure 1;
Figure 4 is a side view of the roller and nozzle wherein the nozzle is shown with half the nozzle removed;
Figure 5 is a side view of the nozzle;
Figure 6 is a perspective view of the nozzle outlet;
Figure 7 is an end view of the outlet of the nozzle; and
Figure 8 is a side view of the rubber applicator apparatus shown applying a rubber strip to a tire building drum.

### Detailed Description of Example Embodiments of the Invention

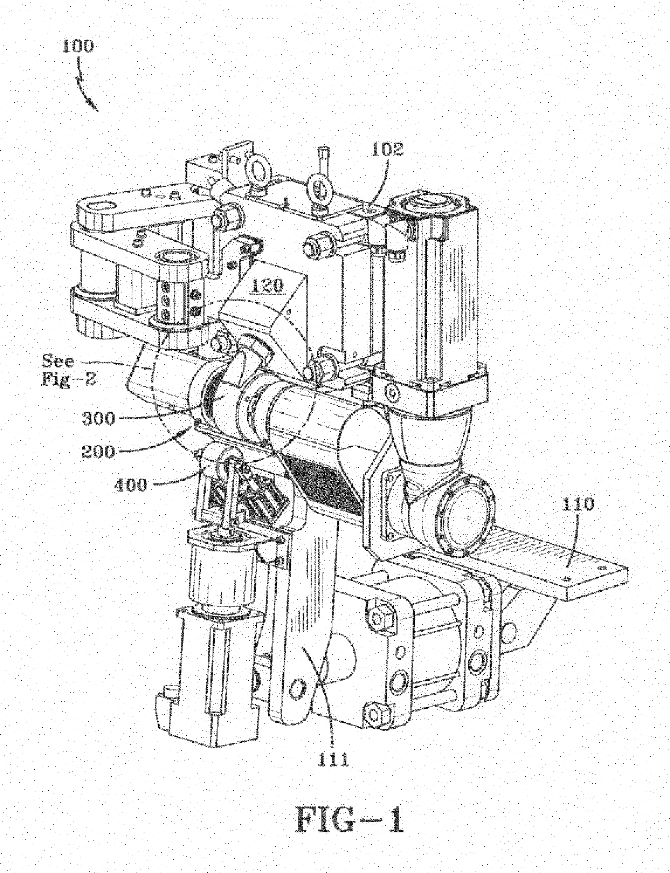

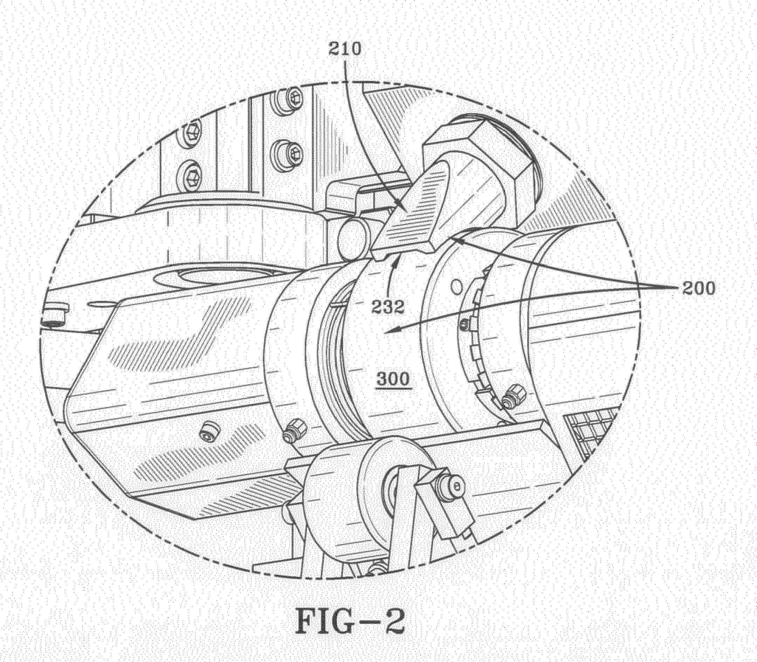

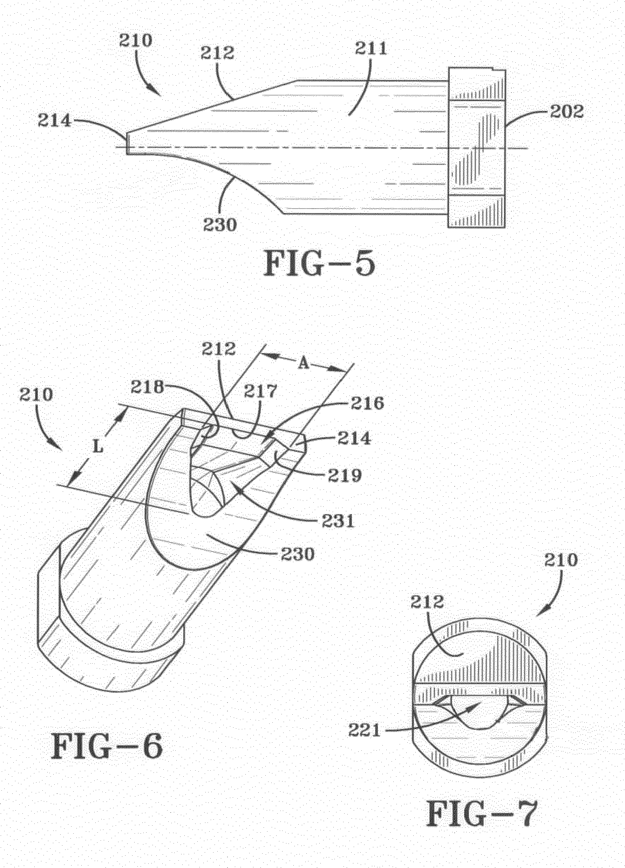

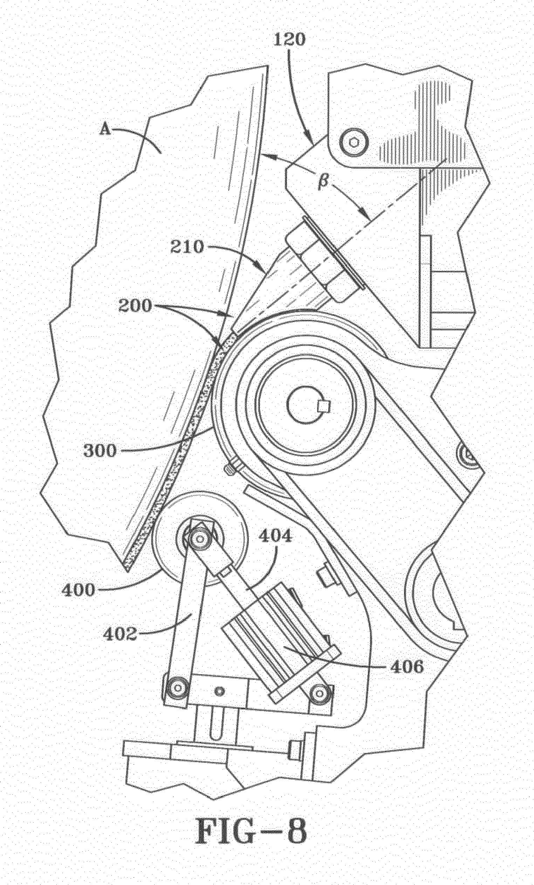

A first embodiment of a rubber applicator apparatus 100 is shown in Figures 1-7. The applicator apparatus 100 provides a novel apparatus to form elastomeric tire components quickly and efficiently from a single continuously wound strip or multiple strips of unvulcanized rubber. A continuous strip of unvulcanized rubber may be applied directly onto a tire building surface such as a tire building drum A as shown in Figure 8, or a toroidal shaped core (not shown).

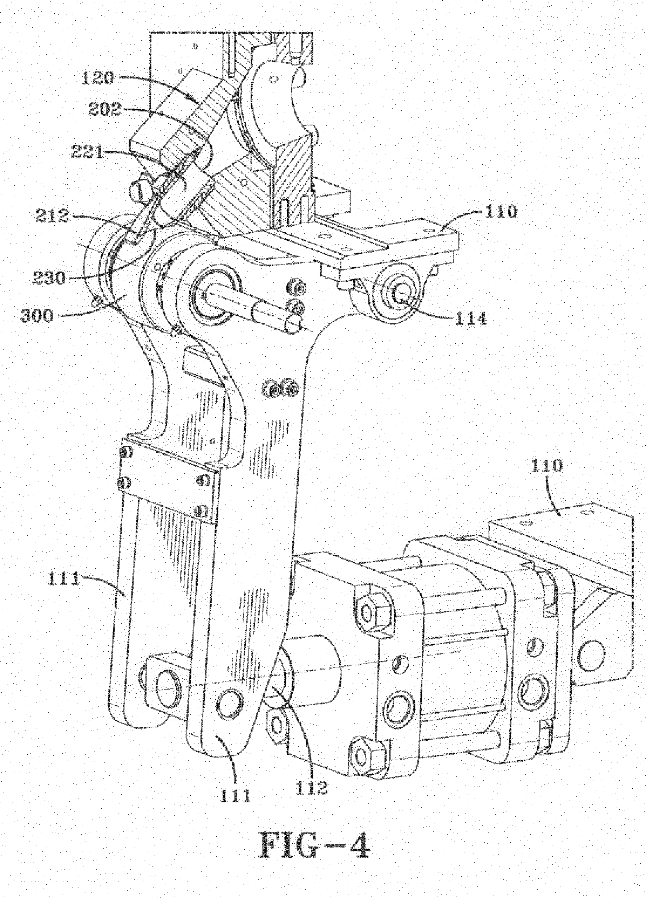

As shown in Figure 1, the applicator apparatus 100 includes a support frame 110 (parts of which have been removed for clarity), and a roller nozzle 200. The support frame may further include support rails for translating the entire applicator apparatus in the X, Y and Z direction (not shown). A rotatable linkage 111 is mounted to the support frame 110, and functions to pivot the roller 300 about fixed point 114 as shown in Figure 4. The rotatable linkage 111 is connected to actuator arm 112 which translates fore and aft to pivot the rotatable linkage 111 about the fixed point 114.

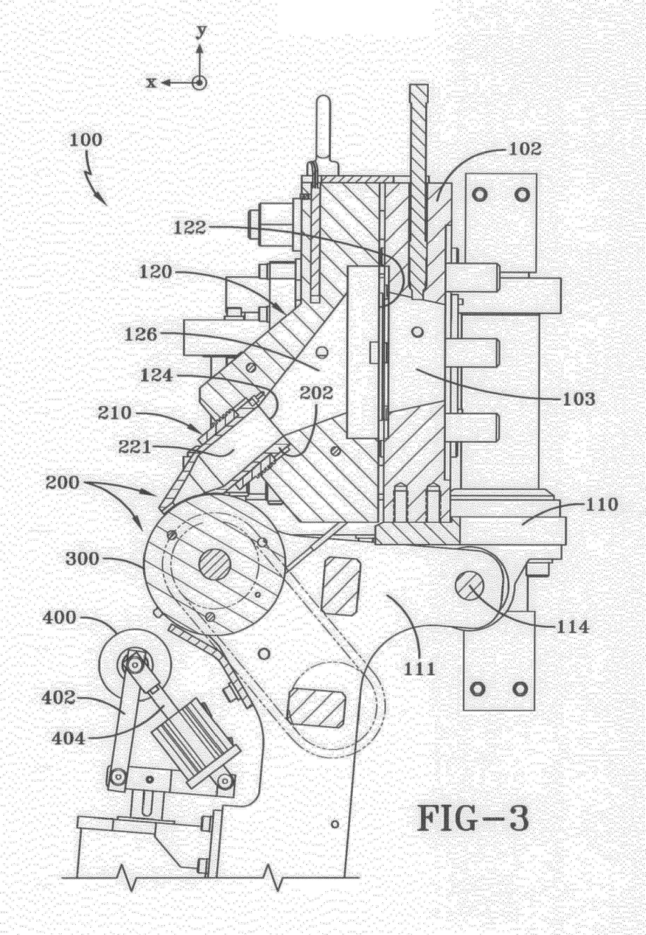

As shown in Figure 3, the support frame 110 includes a mounting flange 102 for connecting to a rubber pumping means such as an extruder, gear pump, extruder-gear pump combination, or rubber injector (not shown). An extruder suitable for use with the invention is made by AZ Formen und Maschinenbau of Munich, Germany. The rubber or elastomer output from the rubber pumping means is fed into an internal passage 103 of the mounting flange and then into a transition member 120. The transition member 120 has an interior channel 126 having an inlet end 122 and an outlet end 124. The inlet end 122 preferably has a larger area than the outlet end 124, resulting in a decreasing area or a funnel-shaped channel 126. Channel 126 is also angled downwardly in the range of about 30 to about 75 degrees with respect to the X axis, more typically 45- 60 degrees. The outlet end 124 of the transition member is connected to an inlet end 202 of a nozzle 210.

The nozzle 210, as best shown in Figures 3-7, has a generally cylindrically shaped outer body 211 terminating in an angled face 212 at the nozzle outlet 223. The nozzle has an interior channel 221 that has a decreasing area from the inlet end 202 to the outlet orifice 223 of the nozzle. The angled face 212 of the nozzle terminates in an edge 214. The edge 214 forms a juncture between the angled face 212 and a curved outlet surface 230 of the nozzle. The lower surface of the edge 214 has a shaped die surface 216 that cooperates with the curved outer surface of the roller 300 to form the nozzle outlet. The shaped die surface 216 in this example, has a flat edge 217 with opposed beveled ends 218, 219 which forms a strip with beveled edges. The die shape is not limited to the configuration shown, and may form other shapes as desired. The curved lower surface 230 of the nozzle is shaped to cooperate with the outer surface of roller 300 in order to form the strip. The lower surface of the nozzle has an opening 231 that is V-shaped. The opening 231 has an axial width A and a longitudinal length L, wherein the length is greater than 1.5 times the axial width A. The opening 231 is wide to allow the rubber to engage the outer surface of the roller 300 before exiting the outlet 232. The wide opening allows the rubber or elastomer to engage the outer surface of the roller. As the roller 300 rotates, the outer surface of the roller 300 engages the rubber flowing through the nozzle, and pulls the rubber towards the nozzle outlet 232. The pulling of the rubber by the roller lowers the internal pressure and temperature of the rubber as it travels through the system 100. The lower extrusion temperatures reduce stretch of the rubber. As the rubber is pulled towards the nozzle outlet 232, it is shaped by die surfaces 217, 218, 219 of the upper edge 214 and the roller outer surface 300. Preferably, the roller 300 is heated.

The outlet die surfaces 217, 218, 219 of the nozzle is shown with a trapezoidal shape, however other configurations may be used such as, but not limited to, square, rectangular, triangular, etc. The width of the rubber strip output from the nozzle orifice is typically 15 mm in width, but may vary in the range of from 5 mm to 30 mm. The nozzle 212 may be optionally heated to a temperature in the range of from 0 to 200 degrees F using external or internal heaters (not shown).

As shown in Figure 8, the nozzle 210 is oriented with respect to the tire building drum A, core (not shown) or other application surface typically at an angle β in the range of from 0 to 50 degrees, more typically in the range of from 20 to 35 degrees. The rubber from the nozzle is first adhered to the roller 300, and then pushed through the nozzle outlet and then applied by the rotating roller 300 to the tire building drum A, as shown in Figure 8. A stitcher roller 400 is positioned adjacent the roller 300, and applies pressure to secure the strip onto the drum. The stitcher roller 400 is attached to link arm 402 that is pivotally connected to the support frame 110. The stitcher roller 400 is connected to actuator arm 404 connected to actuator 406.

The roller assembly 300 preferably has internal heaters for heating the outer surface in the range of from 200 to 400 degrees F, and more preferably in the range of 350 to 400 degrees F. Thus, the roller functions as a hot knife, smoothing and smearing the freshly deposited rubber, melting and blending the adjacent strips of rubber together, into a homogeneous mass. The higher roller temperature does not impact the curing of rubber due to the short residence time. The stitcher assembly 400 performs a stitcher function due to the pressure of the roller against the drum, smoothing out the air pockets. The outer surface of the roller also helps shape the formed component.

The roller assembly 300 preferably is connected to a linkage system 500 connected to an air cylinder as shown in Fig. 4, so that the roller 300 may be raised and lowered.

The following steps describe the formation of a tire component such as a sidewall, chafer, liner, or other elastomeric article. Rubber or elastomer is fed to a pumping means, such as an injector, gear pump, extruder or combination thereof. The rubber extrudate is pumped into the rubber applicator apparatus by the pumping means. In the applicator apparatus, the elastomeric material is fed from the extruder or pumping means (not shown) into an internal passage of the transition member. The internal passage of the transition member decreases in area and utilizes gravity to push the rubber down the internal passage. The elastomer or rubber flow exits the interior passage and enters a nozzle. The nozzle has a curved lower surface having an opening that is positioned in mating engagement with the roller. The opening on the lower curved surface of the nozzle has a wide area that presses the rubber directly onto the roller surface. As the roller rotates, it pulls the rubber through the nozzle towards the nozzle outlet. The pulling action by the roller reduces the temperature and pressure of the rubber, as less extruder pressure is needed to pump the rubber through the system. As the rubber exits the nozzle, it is shaped as it passes through the nozzle outlet by the die surfaces 217, 218, 219 forming a shaped strip of rubber. The strip of rubber is then immediately applied to a mandrel or tire building surface. The nozzle assembly is capable of translating in three directions in discrete index positions in order to accurately apply the rubber to the building surface. The support surface can be is a toroid shaped core or a cylindrical shaped tire building drum, or any other desired shape. The primary advantage of applying the strip to a toroidally shaped surface is the finished part is accurately positioned in a green uncured state at the proper orientation to be molded without requiring any change in orientation from the condition in which the strip was initially formed.

The extrudate exits the nozzle in a strip form, having the desired shape of the exit orifice of the nozzle. If a drum or toroid is used as an applicator surface, as the drum or core rotates, a continuous annular strip may be formed. The nozzle can be indexed axially so to form the desired shape of the component. The nozzle can be controlled by a control system wherein the movement of the nozzle so that the multiple layers of strip dictates the shape of the desired tire component.

## Claims

1. A nozzle and roller apparatus comprising a rotatable roller (300) having an outer surface and a nozzle (210) having an inlet and an outlet, the nozzle (210) having a curved surface (230) having an opening (231), wherein the curved surface (230) and the opening (231) is positioned in mating engagement with an outer surface of the rotatable roller (300) and the curved surface (230) is shaped to cooperate with the outer surface of the rotatable roller (300) to form a strip, wherein the opening (231) is V-shaped when viewed in top view onto the curved surface (230) and onto the opening (231), and wherein the longitudinal length (L) of the opening (231) is greater than 1.5 times the axial width (A) of the opening (231).

2. The roller and nozzle apparatus of claim 1, wherein the outlet of the nozzle (210) further includes a die.

3. The roller and nozzle apparatus of claim 1 and 2, wherein the outlet of the nozzle (210) is formed between the roller outer surface and the curved surface of the nozzle (210).

4. The roller and nozzle apparatus of claim 1, 2 or 3, wherein the roller (300) is pivotally mounted so it can pivot about a fixed point.

5. A method of forming a strip of elastomeric material, the method comprising the steps of:
positioning a lower curved surface (230) of a nozzle (210) in mating engagement with a rotatable roller (300);
pumping a preferably molten elastomeric material through the nozzle (210), said nozzle having an outlet (231) on the lower curved surface (230); and
extruding the preferably molten elastomeric material onto the roller outer surface and through the outlet (231) of the nozzle (210) forming the shaped strip;
wherein the outlet (231) of the nozzle (210) on the lower curved surface (230) is V-shaped when viewed in top view onto the lower curved surface (230) and the nozzle outlet (231) and the longitudinal length (L) of the opening (231) is greater than 1.5 times the axial width (A) of the opening (231).

6. The method of claim 5 wherein the nozzle (210) compresses the elastomeric material directly onto the outer surface of the roller (300).

7. The method of claim 5 or 6 wherein the elastomeric material is in a molten state in the nozzle.

8. The method of claim 5, 6 or 7 wherein the elastomeric material is in a molten state when it is applied to the roller outer surface.

9. The method of at least one of the previous claims 5 to 8, wherein the nozzle (210) has a shaped die surface that cooperates with the curved outer surface of the roller (300) to form a nozzle outlet.

10. The method of at least one of the previous claims 5 to 9, wherein the roller outer surface has a temperature in the range of from 93°C to 177°C.

## Patentansprüche

1. Düsen- und Walzenvorrichtung, umfassend eine rotierbare Walze (300), die eine Außenfläche aufweist, und eine Düse (210), die einen Einlass und einen Auslass aufweist, wobei die Düse (210) eine gekrümmte Oberfläche (230), die eine Öffnung (231) aufweist, aufweist, wobei die gekrümmte Oberfläche (230) und die Öffnung (231) in Passeingriff mit einer Außenfläche der rotierbaren Walze (300) angeordnet ist und die gekrümmte Oberfläche (230) so ausgebildet ist, dass sie mit der Außenfläche der rotierbaren Walze (300) zusammenwirkt, um einen Streifen zu bilden, wobei die Öffnung (231), gesehen in Draufsicht auf die gekrümmte Oberfläche (230) und auf die Öffnung (231), V-förmig ist, und wobei die Längserstreckung (L) der Öffnung (231) größer als 1,5 Mal de axiale Breite (A) der Öffnung (231) ist.

2. Walzen- und Düsenvorrichtung nach Anspruch 1, wobei der Auslass der Düse (210) weiter ein Werkzeug beinhaltet.

3. Walzen- und Düsenvorrichtung nach Anspruch 1 und 2, wobei der Auslass der Düse (210) zwischen der Walzenaußenfläche und der gekrümmten Oberfläche der Düse (210) gebildet ist.

4. Walzen- und Düsenvorrichtung nach Anspruch 1, 2 oder 3, wobei die Walze (300) schwenkbar montiert ist, sodass sie um einen feststehenden Punkt schwenken kann.

5. Verfahren zum Formen eines Streifens von Elastomermaterial, wobei das Verfahren folgende Schritte umfasst:
Positionieren einer unteren gekrümmten Oberfläche (230) einer Düse (210) in Passeingriff mit einer rotierbaren Walze (300);
Pumpen eines bevorzugt geschmolzenen Elastomermaterials durch die Düse (210), wobei die Düse einen Auslass (231) an der unteren gekrümmten Oberfläche (230) aufweist; und
Extrudieren des bevorzugt geschmolzenen Elastomermaterials auf die Walzenaußenfläche und durch den Auslass (231) der Düse (210), die den geformten Streifen bildet;
wobei der Auslass (231) der Düse (210) an der unteren gekrümmten Oberfläche (230), gesehen in Draufsicht auf die gekrümmte Oberfläche (230) und den Düsenauslass (231), V-förmig ist und die Längserstreckung (L) der Öffnung (231) größer als 1,5 Mal de axiale Breite (A) der Öffnung (231) ist.

6. Verfahren nach Anspruch 5, wobei die Düse (210) das Elastomermaterial direkt auf die Außenfläche der Walze (300) komprimiert.

7. Verfahren nach Anspruch 5 oder 6, wobei sich das Elastomermaterial in geschmolzenem Zustand in der Düse befindet.

8. Verfahren nach Anspruch 5, 6 oder 7, wobei sich das Elastomermaterial in geschmolzenem Zustand befindet, wenn es auf die Walzenaußenfläche aufgebracht wird.

9. Verfahren nach mindestens einem der vorhergehenden Ansprüche 5 bis 8, wobei die Düse (210) eine geformte Werkzeugoberfläche aufweist, die mit der gekrümmten Außenfläche der Walze (300) zusammenwirkt, um einen Düsenauslass zu bilden.

10. Verfahren nach mindestens einem der vorhergehenden Ansprüche 5 bis 9, wobei die Walzenaußenfläche eine Temperatur im Bereich von 93°C bis 177°C aufweist.

## Revendications

1. Appareil du type à buse et à cylindre comprenant un cylindre rotatif (300) possédant une surface externe et une buse (210) possédant une entrée et une sortie, la buse (210) possédant une surface courbe (230) comportant une ouverture (231) ; dans lequel la surface courbe (230) et l'ouverture (231) sont disposées en contact d'appariement avec une surface externe du cylindre rotatif (300), et la surface courbe (230) est configurée pour coopérer avec la surface externe du cylindre rotatif (300) dans le but de former une bande ; dans lequel l'ouverture (231) possède une configuration en forme de V lorsqu'on regarde dans une vue de sommet en direction de la surface courbe (230) et de l'ouverture (231) ; et dans lequel la longueur longitudinale (L) de l'ouverture (231) est supérieure à 1,5 fois la largeur axiale (A) de l'ouverture (231).

2. Appareil du type à buse et à cylindre selon la revendication 1, dans lequel la sortie de la buse (210) englobe en outre une filière.

3. Appareil du type à buse et à cylindre selon les revendications 1 et 2, dans lequel la sortie de la buse (210) est réalisée entre la surface externe du cylindre et la surface courbe de la buse (210).

4. Appareil du type à buse et à cylindre selon la revendication 1, 2 ou 3, dans lequel le cylindre (300) est monté en pivotement de manière à pouvoir pivoter autour d'un point fixe.

5. Procédé de formation d'une bande de matière élastomère, le procédé comprenant les étapes consistant à :
positionner une surface inférieure courbe (230) d'une buse (210) en contact d'appariement avec un cylindre rotatif (300) ;
pomper une matière élastomère de préférence à l'état fondu à travers la buse (210), ladite buse possédant une sortie (231) sur la surface inférieure courbe (230) ; et
extruder la matière élastomère de préférence à l'état fondu sur la surface externe du cylindre et à travers la sortie (231) de la buse (210) pour former la bande configurée ;
dans lequel la sortie (231) de la buse (210) sur la surface inférieure courbe (230) possède une configuration en forme de V lorsqu'on regarde dans une vue de sommet en direction de la surface inférieure courbe (230) et de la sortie de buse (231) ; et dans lequel la longueur longitudinale (L) de l'ouverture (231) est supérieure à 1,5 fois la largeur axiale (A) de l'ouverture (231).

6. Procédé selon la revendication 5, dans lequel la buse (210) comprime la matière élastomère directement contre la surface externe du cylindre (300).

7. Procédé selon la revendication 5 ou 6, dans lequel la matière élastomère est à l'état fondu dans la buse.

8. Procédé selon la revendication 5, 6 ou 7, dans lequel la matière élastomère est à l'état fondu lors de son application sur la surface externe du cylindre.

9. Procédé selon au moins une des revendications précédentes 5 à 8, dans lequel la buse (210) possède une surface de filière configurée qui coopère avec la surface externe courbe du cylindre (300) pour former la sortie de la buse.

10. Procédé selon au moins une des revendications précédentes 5 à 9, dans lequel la surface externe du cylindre possède une température qui se situe dans la plage de 93 °C à 177 °C.
